# EUROPEAN PATENT SPECIFICATION

(11) **EP 3 764 566 B1**
(45) Date of publication and mention of the grant of the patent: **25.12.2024**
(21) Application number: 18908330.6
(22) Date of filing: 25.12.2018
(51) Int. Cl.: H04B 10/071, H01S 3/30, G01M 11/00

(54) **DETECTION METHOD AND DEVICE FOR HIGH-DYNAMIC-RANGE OPTICAL TIME DOMAIN REFLECTION**
DETEKTIONSVERFAHREN UND -VORRICHTUNG FÜR OPTISCHE ZEITBEREICHSREFLEXION MIT HOHEM DYNAMIKBEREICH
PROCÉDÉ ET DISPOSITIF DE DÉTECTION POUR RÉFLEXION DE DOMAINE TEMPOREL OPTIQUE À PLAGE DYNAMIQUE ÉLEVÉE

(30) Priority: 08.03.2018 CN 201810191046
(43) Date of publication of application: 13.01.2021
(73) Proprietor: Accelink Technologies Co., Ltd., Wuhan, Hubei 430205 (CN)
(72) Inventor: ZHOU, Qi, Wuhan, Hubei 430205 (CN); BU, Qinlian, Wuhan, Hubei 430205 (CN); XIONG, Tao, Wuhan, Hubei 430205 (CN); FU, Chengpeng, Wuhan, Hubei 430205 (CN); ZHANG, Jiantao, Wuhan, Hubei 430205 (CN); YU, Chunping, Wuhan, Hubei 430205 (CN); LE, Menghui, Wuhan, Hubei 430205 (CN)
(74) Representative: Frenkel, Matthias Alexander
(86) International application number: PCT/CN2018/123408
(87) International publication number: WO 2019/169934

(56) References cited:
- CN-A- 103 199 920
- CN-A- 106 452 569
- CN-A- 107 332 101
- CN-A- 108 199 767
- CN-A- 108 199 767
- CN-U- 202 177 385
- US-A1- 2015 253 217
- US-A1- 2015 253 217

## Description

### TECHNICAL FIELD OF THE DISCLOSURE

The present disclosure relates to the technical field of optical time domain reflectometer (OTDR), in particular to a detection method and device for high-dynamic-range optical time domain reflection.

### BACKGROUND

Currently, the communication networks of various countries in the world mainly use optical fibers as a transmission basis. The OTDR is usually used for testing characteristics of optical fiber when constructing and maintaining optical cable lines, and is also an important device of an on-line monitoring system in an optical communication network. A dynamic range is one of important technical indexes of the OTDR. The larger the dynamic range of OTDR is, the longer the distance of the optical communication line can be monitored.

The working principle of OTDR is to analyze characteristics of a length, an attenuation, an event and the like of the optical fiber by detecting an energy distribution curve over time of Rayleigh backscattered light of pulse laser in the optical fiber line. When the OTDR emits one detection optical pulse to an optical fiber to be detected, the detection optical pulse will generate Rayleigh backscattered light while transmitting forward in the optical fiber. Fresnel reflection light will also be generated when a reflection type of event occurs. Continuously sampling these returned signals at high speed can obtain a measurement curve reflecting the characteristics of fiber attenuation, fault and the like by means of changes of signal power. The dynamic range determines a largest fiber length that can be measured by the OTDR.

The dynamic range is closely related to a signal-to-noise ratio. When the signal-to-noise ratio is too low, effective information is overwhelmed by noises and cannot be obtained. The signal-to-noise ratio is conventionally improved by selecting a laser with higher power. However, due to limitations of process level, the power of a single laser may not be increased indefinitely, and too high laser power may cause nonlinearity in the optical fiber, thus affecting the performance of OTDR. Therefore, how to further improve the dynamic range after selecting a laser with a high power has high research value.

U.S. Patent No. 9,494,484 proposes a solution for performing OTDR measurement in an optical path containing a Raman amplifier. However this solution sends one single Raman amplifying optical pulse only when an OTDR detection laser sends a detection optical pulse, and its principle is mainly to amplify the detection optical pulse by forward Raman pumping, which has very limited improvement effect on the dynamic range. Moreover, this solution has a problem that a front-end curve is smoother than a back-end curve and an absolute value of its slope is smaller, i.e. it does not provide a method for solving distortion of the front-end measurement curve caused by the Raman amplifier. The problem will lead to the inability to obtain accurate information of a front section of the optical fiber from measurement results, thus the overall performance of the product will be seriously affected.

Chinese Patent Application No. 201611144348.3 discloses a multi-backup OTDR optical amplification device with a shared light source. The device comprises a pump laser combination unit composed of a main control unit, a data collecting and processing unit, a laser control driving unit and N pump lasers, an optical switch control matrix, N*1 optical switches, an optical circulator, an output optical switch and a pump combiner MUX; N 1*2 optical switches are arranged in the optical switch control matrix; N is not smaller than 2; the laser control driving unit comprises a mode selection switch matrix and a laser control driving matrix; N driving units are arranged in the laser control driving matrix; the main control unit is connected with and controls the mode selection switch matrix; and the driving units in the laser control driving matrix are separately connected with the corresponding pump lasers in the pump laser combination unit. The multi-backup OTDR optical amplification device shares the pump lasers to achieve a built-in OTDR function of the optical amplification device, and the backup light source improves the reliability of OTDR.

### SUMMARY

The technical problem to be solved in embodiments of the present disclosure is how to increase the dynamic range detected by the OTDR, thus increasing the distance of the optical fiber detected by the OTDR.

Preferred embodiments of the present disclosure are provided as defined in the appended claims, by which the protection scope is to be set.

Compared with the prior art, the beneficial effects of the embodiments of the present disclosure are as follows:

According to the multi-pulse solution proposed by the present disclosure, not only can the detection optical pulse be amplified via the forward Raman optical pulse, but also can a plurality of Raman optical pulses be continuously sent via the Raman laser after the OTDR detection laser is closed, to directly amplify the Rayleigh backscattered optical signal and/or the Fresnel reflection optical signal generated by the detection optical pulse.

According to the principle of Raman amplifier, the transferring direction of the Raman optical pulse in the optical fiber is opposite to that of the Rayleigh backscattered optical signal, but it can still produce an amplification effect to the Rayleigh backscattered optical signal. Measurement of ultra-long-distance optical fiber is ensured through the solution proposed by the present disclosure, i.e. when the Rayleigh backscattered optical signal received by the receiver is lower than a certain level, a next Raman optical pulse is sent to amplify the Rayleigh backscattered optical signal in order to maintain the power of the Rayleigh backscattered optical signal and/or the Fresnel reflection optical signal always at a relatively high level at a front end of the optical fiber.

Compared with the solution of the U.S. Patent No. 9,494,484, there is a difference in principle between the present disclosure and the above U.S Patent, and the effect of the present disclosure is more significant. In addition, the splicing method provided by the present disclosure, i.e. to splice proximal information obtained by the conventional measurement used OTDR and distal information obtained by the measurement by means of the Raman amplifier, solves the distortion problem of less slope of the front-end curve that is not solved in the U.S. Patent No. 9,494,484, and improves the accuracy of measurement results.

### BRIEF DESCRIPTION OF THE DRAWINGS

In order to more clearly explain the technical solutions of the embodiments of the present disclosure or technical solutions in the prior art, the following will briefly introduce drawings that need to be used in the description of the embodiments or the prior art, and obviously, the drawings in the following description are only some embodiments of the present disclosure, and for those ordinary skill in the art, other drawings can be obtained based on these drawings without inventive labor.
Fig. 1 is a schematic structural diagram of a detection device for high-dynamic-range optical time domain reflection provided by an embodiment of the present disclosure.
Fig. 2 is a schematic diagram of structural layout of a circulator described in an embodiment of the present disclosure.
Fig. 3 is a more detailed schematic structural diagram of a detection device for high-dynamic-range optical time domain reflection in an example occasion provided by an embodiment of the present disclosure.
Fig. 4 is a schematic structural diagram of a detection device for high-dynamic-range optical time domain reflection with an extended functional module provided by an embodiment of the present disclosure.
Fig. 5 is a flow schematic diagram of a detection method for high-dynamic-range optical time domain reflection provided by an embodiment of the present disclosure.
Fig. 6 is a flow schematic diagram of a detection method for high-dynamic-range optical time domain reflection in a specific example environment provided by an embodiment of the present disclosure.
Fig. 7 is a measurement result diagram under a condition that light is continuously emitted from the Raman laser provided by an embodiment of the present disclosure.
Fig. 8 is a measurement result diagram obtained by using a detection method provided by an embodiment of the present disclosure.
Fig. 9 is a measurement result diagram obtained by using a detection method of an embodiment of the present disclosure and provided by the embodiment of the present disclosure.

### DETAILED DESCRIPTION

In order to make the objects, technical solutions and advantages of the present disclosure more obvious, the present disclosure is further described in detail below with reference to the drawings and embodiments. It should be noted that the specific embodiments described herein are only for explaining but not for limiting the present disclosure.

In the description of the present disclosure, orientations or positional relationships indicated by terms "inside", "outside", "longitudinal", "horizontal", "upper", "lower", "top", "bottom" and the like are based on the orientations or positional relationships shown in the drawings and merely for the convenience of describing the present disclosure, not requiring that any apparatus or method in the present disclosure must be constructed and operated in a specific orientation disclosed in the present disclosure, therefore should not be understood as a limitation to the present disclosure in any way.

In addition, the technical features involved in various embodiments of the present disclosure described below may be combined with each other as long as they are not in conflict with each other.

### Embodiment 1

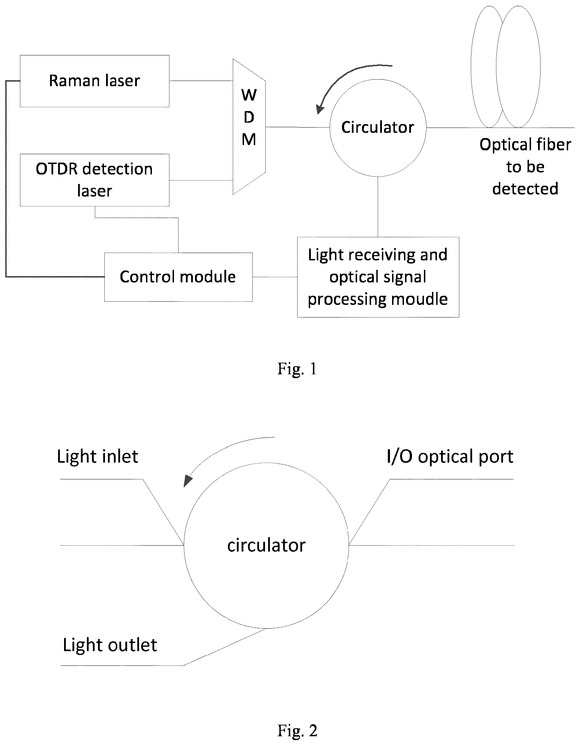

Embodiment 1 of the present disclosure provides a detection device for high-dynamic-range optical time domain reflection, as shown in Fig. 1, comprising a Raman laser, an OTDR detection laser, a Wavelength Division Multiplexing (WDM), a control module, a light receiving and optical signal processing module, and a circulator.

The Raman laser and the OTDR detection laser are respectively connected with the WDM, a light outlet of which is connected with a light inlet of the circulator (when the circulator used in the device in Fig. 1 is separately extracted to show an interface distribution thereof, the corresponding distribution structure is shown in Fig. 2), and pulse light emitted by the Raman laser and the OTDR detection laser is multiplexed by the WDM and then enters an optical fiber to be detected through an I/O optical port of the circulator (as shown in Fig. 2).

The light receiving and optical signal processing module is connected with a light outlet of the circulator to obtain Rayleigh backscattered light and/or Fresnel reflection light returned from the optical fiber to be detected, and is also connected with the control module to send related information of reflection light to the control module.

The light receiving and optical signal processing module has an optical filtering function and a circuit filtering function, which are used to perform a photoelectric conversion and a noise filtering processing on the received reflection optical signal, and send related information of processed reflection light to the control module, wherein the related information of reflection light includes: optical power intensity, light intensity distribution, receiving time and the like of the Rayleigh backscattered light and/or Fresnel reflection light.

The control module is used for controlling a driving pin of the Raman laser, and controlling the Raman laser to emit at least two optical pulses with a time interval within one detection time period according to the related information of reflection light.

According to the multi-pulse solution provided by the embodiment of the present disclosure, not only can the detection optical pulses be amplified by a forward Raman optical pulse, but also can the Rayleigh backscattered optical signal and/or the Fresnel reflection optical signal generated by the detection optical pulse be directly amplified via a plurality of Raman optical pulses continuously sent through the Raman laser after the OTDR detection laser is closed.

The Raman optical pulse transfers in the optical fiber in a direction opposite to that of the Rayleigh backscattered optical signal, but it can still amplify the Rayleigh backscattered optical signal. Measurement of ultra-long-distance optical fiber is ensured through the solution provided by the present disclosure, i.e. when the Rayleigh backscattered optical signal received by the light receiving and optical signal processing module is lower than a certain level, a next Raman optical pulse is sent for amplifying the Rayleigh backscattered optical signal to maintain power of the Rayleigh backscattered optical signal and/or the Fresnel reflection optical signal always at a relatively high level at a front end of the optical fiber.

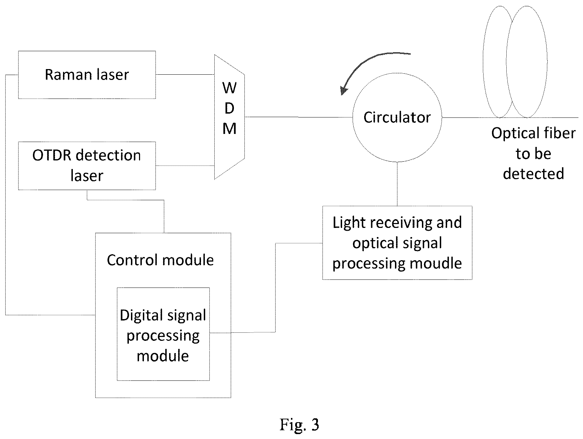

Fig. 3 shows a schematic diagram of a structure exemplified in a specific application situation in combination with the detection state as described in the Embodiment 1 of the present disclosure. Compared with the structure described in the Embodiment 1, the control module in the exemplified solution further includes a digital signal processing module.

The digital signal processing module is connected with the light receiving and optical signal processing module, in order to analyze distal information of the optical fiber according to the related information of the Rayleigh backscattered light and/or the Fresnel reflection light, and to feed back distal information of the optical fiber to the control module. The digital signal processing module can be embodied as a DSP, and a control core of the corresponding control module can be implemented by means of an FPGA, a single chip microcomputer or a PC.

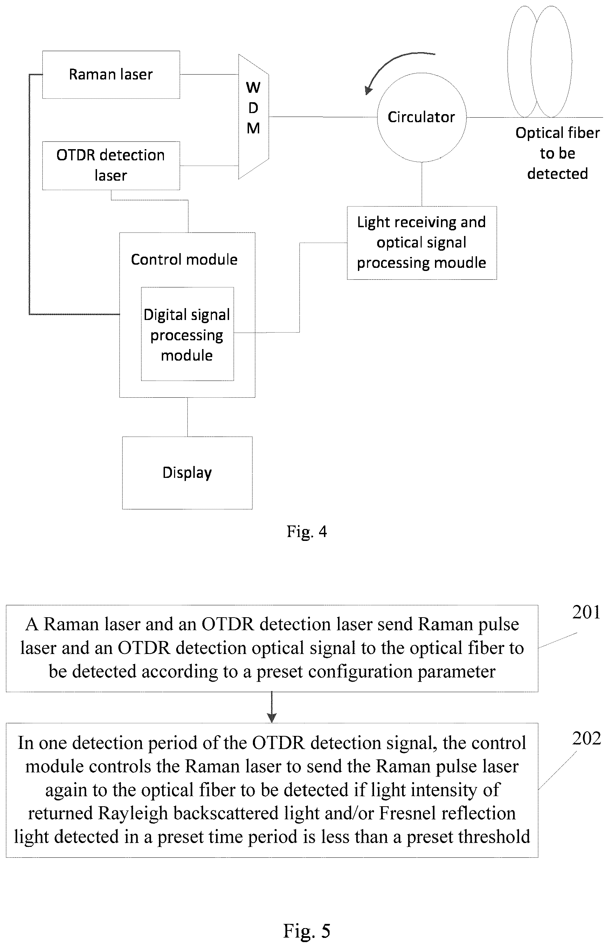

As shown in Fig. 4, it is an improvement solution further proposed to implement a design idea of an embodiment of the present disclosure to improve the interaction efficiency and to help an operator to directly obtain effective information from the detection device proposed in the embodiment of the present disclosure, without externally connecting other equipment, wherein the detection device further comprises a display.

The display is connected with the digital signal processing module or the controller and is used for displaying an analysis result of the detection device.

A cascaded Raman fiber laser has advantages of being long in gain medium, low in noise, wide in tuning range, capable of simultaneously realizing multi-wavelength output, and high in coupling efficiency with optical fibers and the like. The cascaded Raman fiber laser is used for pumping a fiber Raman amplifier to realize flat amplification in a wide bandwidth, and is an ideal pumping source for the fiber Raman amplifier. A multi-wavelength output cascaded Raman fiber laser is used as a signal source of the fiber communication system, especially the wavelength division multiplexing system, which can reduce a number of lasers at the emitting terminal. Therefore, the Raman laser can further be implemented in a cascaded manner in combination with embodiments of the present disclosure.

### Embodiment 2

After providing a detection device for high-dynamic-range optical time domain reflection described in Embodiment 1, Embodiment 2 of the present disclosure also proposes a detection method for high-dynamic-range optical time domain reflection, wherein basic connection characteristics need to be realized in the detection method, and a control module is used for controlling a working state of a Raman laser and an OTDR detection laser, and is further used for obtaining an optical signal reflected from an optical fiber to be detected (compared with the connection characteristics mentioned above, it can be seen that the corresponding detection method of the present disclosure can also be implemented by the detection device described in Embodiment 1). As shown in Fig. 5, the detection method comprises following steps:

in Step 201, a Raman laser and an OTDR detection laser send Raman pulse laser and an OTDR detection optical signal to the optical fiber to be detected according to a preset configuration parameter.

in Step 202, in one detection period of the OTDR detection optical signal, the control module controls the Raman laser to send the Raman pulse laser again to the optical fiber to be detected if light intensity of returned Rayleigh backscattered light and/or Fresnel reflection light detected in a preset time period is less than a preset threshold.

According to the multi-pulse solution provided by the embodiment of the present disclosure, not only can the forward Raman optical pulse amplify the detection optical pulse, but also can a plurality of Raman optical pulses be continuously sent through the Raman laser after the OTDR detection laser is closed to directly amplify the Rayleigh backscattered optical signal and/or the Fresnel reflection optical signal generated by the detection optical signal.

In embodiments of the present disclosure, a pulse width of the optical pulses sent by the Raman laser and a time interval between the optical pulses may be equal or unequal. The specific number of pulses, the width of each pulse, and the time interval between various pulses can be adjusted according to the power level of the optical signal actually received by the light receiving and optical signal processing module, so as to achieve a better result. The above-mentioned parameters can be obtained through the amplification principle of the existing Raman laser and a plurality of test experiments in the implementation of the present disclosure, and will not be repeated here.

In order to further provide a technical idea of how the embodiments of the present disclosure to be implemented in a specific application scene, a concept of the detection period of the OTDR detection optical signal proposed in the embodiments of the present disclosure could more clearly explain and define the detection period of the OTDR detection optical signal. One detection period of the OTDR detection optical signal is determined according to one or more of a number of nodes on the optical fiber to be detected, a bandwidth of the detection optical signal and a processing speed of the control module, wherein the number of nodes in the optical fiber is represented as a branch, a relay and the like, which could increase the complexity of the analysis to a certain extent. When said one detection period of the OTDR detection optical signal is specifically Nms, the preset time period is within Mms after the OTDR detection optical signal is emitted in a current round of detection period, where said Mms takes a value from an interval [0, N/2], and M and N are corresponding time parameter values. The principle thereof is that the reflected optical signal in MmS time period is not used for analyzing the node problem existing in the optical fiber to be detected, but is only used for judging the attenuation condition of the reflected optical signal; and correspondingly, the reason why the Raman pulse laser is not emitted during the [M, N] time period is to prevent the emitted light generated by the emitted Raman pulse laser from affecting a process that the control module normally analyzes the reflected optical signal and parses the node problem existing in the optical fiber to be detected. Under normal circumstances, when performing the normal analysis for the reflected optical signal, it will firstly determine whether the detection optical signal is emitted into the optical fiber to be detected to form the reflection light, and whether its linearity factor reaches a preset threshold (e.g. -0.95), if it reaches the preset threshold, it shows that the influence of the Raman pulse optical signal on the reflected optical signal can be ignored. In terms of a set of parameters, when the detection period of the OTDR detection optical signal is 4ms±1s, the preset time period is specifically within 1±0.2ms after the OTDR detection optical signal is sent. For example, if the time interval between two detection pulses is 4ms, the Raman optical pulses should not be sent within 1ms to 4ms after one detection pulse is sent. If the Raman laser is made to continuously emit light, generated huge noise will negatively affect the signal-to-noise ratio, thus reducing the dynamic range of the OTDR.

In the embodiments of the present disclosure, in addition to the detection period feature of the OTDR detection optical signal as explained above, there is another key technical element, i.e. the preset threshold, which will be described in more detail below.

The preset threshold is more accurately expressed as a parameter value obtained through calculation according to a preset condition or a preset stipulation. Specifically, the preset threshold is obtained through calculation according to a calculation condition that the optical power of the obtained Rayleigh backscattered light and/or Fresnel reflection light is reduced by 3-5dB from the highest value initially received within one detection period of the OTDR detection optical signal. In the design and testing process of the experiment solution, it is concluded that 3dB is preferred.

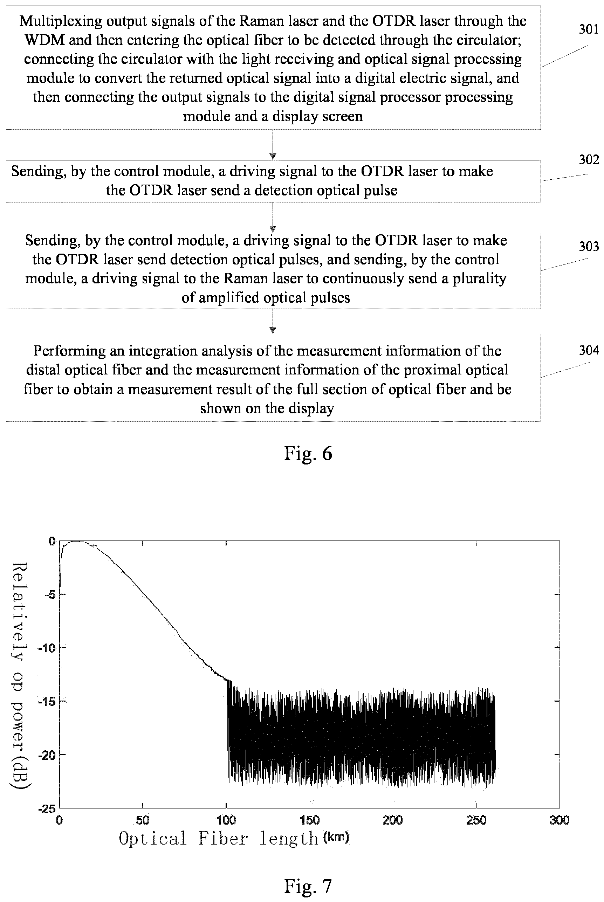

Example, which does not fall within the scope of the appended claims:
An example of the present disclosure combines the detection method as described in the Embodiment 2 and the detection device as described in the Embodiment 1, and provides a method of how to specifically implement the method as described in the Embodiment 2 by means of the detection device as described in the Embodiment 1. As shown in Fig. 6, the method comprises:

Step 301, multiplexing output signals of the Raman laser and the OTDR laser through the WDM and then entering the optical fiber to be detected through the circulator; connecting the circulator with the light receiving and optical signal processing module to convert the returned optical signal into a digital electric signal, and then connecting the output signals to the digital signal processor processing module and a display screen.

The light receiving and optical signal processing module should include a filter, an avalanche photodiode (APD), an amplifier, an analog-to-digital converter and the like. The filter can filter out noises in the returned light, the APD converts the optical signal into an electrical signal, and the analog electrical signal is converted into the digital electric signal by an analog-to-digital converter after being amplified by the amplifier.

Step 302, sending, by the control module, a driving signal to the OTDR laser to make the OTDR laser send a detection optical pulse, obtaining measurement information of a proximal end of the optical fiber through the light receiving and optical signal processing module and the digital signal processing module.

Step 303, sending, by the control module, a driving signal to the OTDR laser to make the OTDR laser send detection optical pulses, and sending, by the control module, a driving signal to the Raman laser to continuously send a plurality of amplified optical pulses.

In order to achieve a better effect, a next Raman optical pulse should be sent when the signal optical power received by the light receiving and optical signal processing module is reduced to a certain level. In the embodiments described in the present specification, the Rayleigh backscattered power received by the light
receiving and optical signal processing module which is reduced by 3dB from the highest value, serves as a reference for sending the next Raman optical pulse. At the same time, the pulse width of the Raman optical pulse should not be too long and the number of the Raman optical pulse should not be too large, in order to avoid affecting the normal sending of next round of detection pulse. In the embodiments of the present disclosure, a quarter of the time interval between two adjacent detection optical pulses is used as a mark to stop sending the Raman optical pulse. That is, if the time interval between two detection pulses is 4ms, no Raman optical pulse should be sent within 1ms to 4ms after one detection pulse is sent. If the Raman laser is continuously made to emit light, the generated huge noise will negatively affect the signal-to-noise ratio, thus reducing the dynamic range of the OTDR (as shown in Fig. 7, the dynamic range thereof is about 15dB). The control module can be realized by using FPGA-like devices. The measurement information of a distal end of the optical fiber can be obtained through the light receiving and optical signal processing module and the digital signal processing module. In actual operation, there is no sequence requirement for Step 302 and Step 303, i.e. the Raman laser can be closed firstly to measure the proximal end of the optical fiber, or the Raman laser can be driven firstly to measure the distal end of the optical fiber.

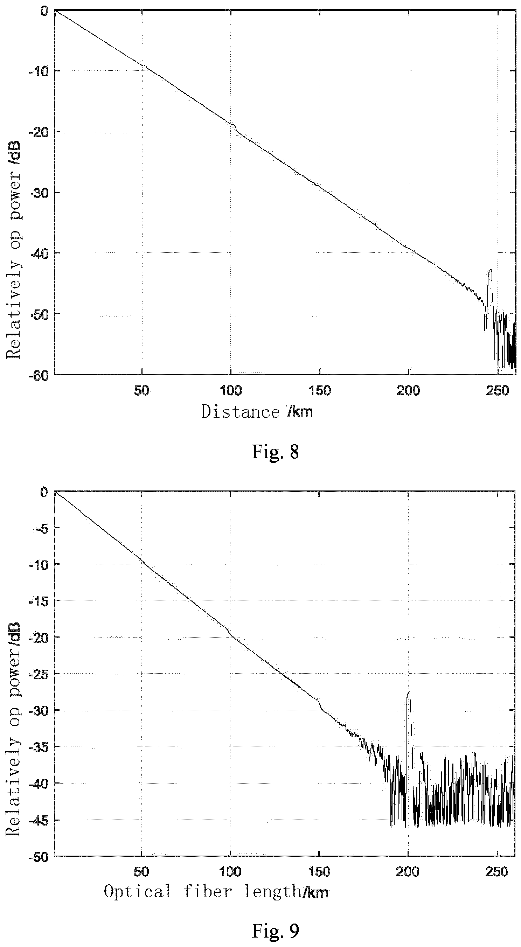

Step 304, performing an integration analysis of the measurement information of the distal optical fiber and the measurement information of the proximal optical fiber to obtain a measurement result of the full section of optical fiber and be shown on the display, as shown in Fig. 8. In Fig. 8, an optical fiber tail end reflection event at a distance of up to 245km is also clearly displayed. According to the definition of single-pass RMS dynamic range in IEC61746-2009, the dynamic range of the OTDR has exceeded 51dB. Compared with the obtained measurement results shown in Fig. 9 without the Raman amplifier under the same condition, the dynamic range has been significantly improved. Furthermore, before the measurement results are displayed on the display, the measurement results can be processed by means of a digital signal processing algorithm such as de-noising and event recognition, thus the events occurring on the optical fiber can be judged more clearly and accurately.

In the multi-stage Raman laser in the embodiments of the present disclosure, the frequency difference between adjacent multi-stage lasers should be kept at about 13THz (e.g. 12THz-13THz), correspondingly, in the multi-stage Raman laser, the longer the wavelength of the laser is, the higher the rated power set for the laser will be.

In the embodiment of the present disclosure, the control module can select an FPGA or similar device as its main device, and the digital signal processing module can select an DSP or similar device as its main device.

In implementing the present disclosure, the width of the detection optical pulse in Step 301 may be less than that of the detection optical pulse in step 302 to ensure the resolution of nearby measurement result. In order to meet the basic resolution requirement, the widest pulse width should not be greater than 20µs.

It should be noted that since the detection device embodiment 1 and the detection method embodiment 2 of the present disclosure are based on the same concept, the specific content thereof can be mutual reference, and will not be repeated here.

The above description is only the preferred embodiments of the present disclosure and is not intended to limit the present disclosure.

## Claims

1. A detection device for high-dynamic-range optical time domain reflection, comprising a Raman laser, an OTDR detection laser, a wavelength division multiplexer WDM, a control module, a light receiving and optical signal processing module, and a circulator,
wherein the Raman laser and the OTDR detection laser are respectively connected with the WDM, a light outlet of which is connected with a light inlet of the circulator, and Raman pulse laser emitted by the Raman laser and pulse light emitted by the OTDR detection laser are multiplexed by the WDM and then enter an optical fiber to be detected via an I/O optical port of the circulator;
wherein the light receiving and optical signal processing module is connected with a light outlet of the circulator to obtain Rayleigh backscattered light and/or Fresnel reflected light returned from the optical fiber to be detected;
wherein the light receiving and optical signal processing module is also connected with the control module to send related information of reflection light to the control module;
wherein the control module is connected to a driving pin of the Raman laser to control the Raman laser to emit, according to the related information of reflection light, at least two optical pulses with a time interval within one detection time period,
**characterized in that** the control module is used to control the Raman laser to send Raman pulse laser again to the optical fiber to be detected, if light intensity of the returned Rayleigh backscattered light and/or Fresnel reflection light detected in a preset time period within one detection period of the pulse light emitted by the OTDR detection laser is less than a preset threshold; and
wherein when said one detection period of the pulse light emitted by the OTDR detection laser is specifically Nms, the preset time period is Mms after the OTDR detection laser emits the pulse light in a current detection period, where said Mms takes a value from an interval [0, N/2], M and N are corresponding time parameter values.

2. The detection device for high-dynamic-range optical time domain reflection of claim 1, **characterized in that**
the control module includes a digital signal processing module, wherein the digital signal processing module is connected with the light receiving and optical signal processing module, to analyze information of a far end of the optical fiber according to related information of the Rayleigh backscattered light and/or Fresnel reflection light and to feed back the information of the far end of the optical fiber to the control module.

3. The detection device for high-dynamic-range optical time domain reflection of claim 2, **characterized in that**
the control module is specifically an FPGA, a single chip microcomputer or a microprocessor; and the digital signal processing module is specifically a DSP.

4. The detection device for high-dynamic-range optical time domain reflection according to any one of claims 1 to 3, **characterized in that**,
the detection device further comprises a display, wherein the display is connected with the digital signal processing module or the control module, and is used for displaying an analysis result of the detection device.

5. The detection device for high-dynamic-range optical time domain reflection according to any one of claims 1 to 3, **characterized in that** the Raman laser is specifically a cascade Raman laser composed of at least two stages.

6. The detection device for high-dynamic-range optical time domain reflection of claim 5, **characterized in that** a frequency difference of each stage of the Raman laser from the cascade Raman laser is 12THz-13THz.

7. A detection method for high-dynamic-range optical time domain reflection, wherein a control module is used for controlling a working state of a Raman laser and an OTDR detection laser, and is further used for obtaining an optical signal reflected from an optical fiber to be detected, and
the detection method comprises:sending (201), Raman pulse laser by the Raman laser and pulse light by the OTDR detection laser to the optical fiber to be detected according to a preset configuration parameter;
**characterized in that** the detection method further comprises:
sending (202), by the Raman laser controlled by the control module, Raman pulse laser again to the optical fiber to be detected, if light intensity of returned Rayleigh backscattered light and/or Fresnel reflection light detected in a preset time period within one detection period of the pulse light emitted by the OTDR detection laser is less than a preset threshold;
wherein when said one detection period of the pulse light emitted by the OTDR detection laser is specifically Nms, the preset time period is Mms after the OTDR detection laser emits the pulse light in a current detection period, where said Mms takes a value from an interval [0, N/2], and M and N are corresponding time parameter values.

8. The detection method for high-dynamic-range optical time domain reflection of claim 7, **characterized in that**
Said one detection period of the pulse light emitted by the OTDR detection laser is determined by one or more of a number of nodes in the optical fiber to be detected, a bandwidth of the pulse light emitted by the OTDR detection laser and a processing speed of the control module.

9. The detection method for high-dynamic-range optical time domain reflection of claim 7, **characterized in that**
when the detection period of the pulse light emitted by the OTDR detection laser is 4ms±1s, the preset time period is specifically within 1±0.2ms after the OTDR detection laser sent the pulse light.

10. The detection method for high-dynamic-range optical time domain reflection of claim 7, **characterized in that**
the preset threshold is obtained through calculation according to a calculation condition that an optical power of obtained Rayleigh backscattered light and/or Fresnel reflection light is reduced by 3-5dB from a highest value initially received within one detection period of the pulse light emitted by the OTDR detection laser.

## Patentansprüche

1. Detektionsvorrichtung für optische Zeitbereichsreflexion mit hohem Dynamikbereich, die einen Raman-Laser, einen OTDR-Detektionslaser, einen Wellenlängenmultiplexer WDM, ein Steuermodul, ein Lichtempfangs- und optisches Signalverarbeitungsmodul und einen Zirkulator umfasst,
wobei der Raman-Laser und der OTDR-Detektionslaser jeweils mit dem WDM verbunden sind, dessen Lichtauslass mit einem Lichteinlass des Zirkulators verbunden ist, und der vom Raman-Laser emittierte Raman-Pulslaser und das vom OTDR-Detektionslaser emittierte Pulslicht durch den WDM gemultiplext werden und dann in eine optische Faser eintreten, um über einen optischen E/A-Anschluss des Zirkulators erfasst zu werden;
wobei das Lichtempfangs- und optische Signalverarbeitungsmodul mit einem Lichtausgang des Zirkulators verbunden ist, um Rayleigh-Rückstreulicht und/oder Fresnel-Reflexionslicht zu erhalten, das von der zu erfassenden optischen Faser zurückkommt;
wobei das Lichtempfangs- und optische Signalverarbeitungsmodul auch mit dem Steuermodul verbunden ist, um entsprechende Informationen über das reflektierte Licht an das Steuermodul zu senden;
wobei das Steuermodul mit einem Treiberstift des Raman-Lasers verbunden ist, um den Raman-Laser so zu steuern, dass er entsprechend der zugehörigen Information des Reflexionslichts mindestens zwei optische Impulse mit einem Zeitintervall innerhalb einer Erfassungszeitspanne emittiert,
**dadurch gekennzeichnet, dass** das Steuermodul verwendet wird, um den Raman-Laser so zu steuern, dass er erneut einen Raman-Pulslaser an die zu detektierende optische Faser sendet, wenn die Lichtintensität des zurückgestreuten Rayleigh-Lichts und/oder des Fresnel-Reflexionslichts, die in einer voreingestellten Zeitspanne innerhalb einer Erfassungsperiode des von dem OTDR-Detektionslaser emittierten Pulslichts detektiert wurden, geringer ist als ein voreingestellter Schwellenwert; und
wobei, wenn die eine Erfassungsperiode des von dem OTDR-Erfassungslaser emittierten Pulslichts spezifisch Nms ist, die voreingestellte Zeitperiode Mms ist, nachdem der OTDR-Erfassungslaser das Pulslicht in einer aktuellen Erfassungsperiode emittiert, wobei Mms einen Wert aus einem Intervall [0, N/2] annimmt, M und N entsprechende Zeitparameterwerte sind.

2. Detektionsvorrichtung für optische Zeitbereichsreflexion mit hohem dynamischen Bereich nach Anspruch 1, **dadurch gekennzeichnet, dass**
das Steuermodul ein digitales Signalverarbeitungsmodul aufweist, wobei das digitale Signalverarbeitungsmodul mit dem Lichtempfangs- und optischen Signalverarbeitungsmodul verbunden ist, um Informationen eines fernen Endes der optischen Faser gemäß zugehörigen Informationen des Rayleigh-Rückstreulichts und/oder des Fresnel-Reflexionslichts zu analysieren und die Informationen des fernen Endes der optischen Faser an das Steuermodul zurückzuleiten.

3. Detektionsvorrichtung für optische Zeitbereichsreflexion mit hohem dynamischen Bereich nach Anspruch 2, **dadurch gekennzeichnet, dass**
das Steuermodul insbesondere ein FPGA, ein Ein-Chip-Mikrocomputer oder ein Mikroprozessor ist; und das digitale Signalverarbeitungsmodul insbesondere ein DSP ist.

4. Detektionsvorrichtung für optische Zeitbereichsreflexion mit hohem dynamischen Bereich nach einem der Ansprüche 1 bis 3, **dadurch gekennzeichnet, dass**,
die Detektionsvorrichtung ferner eine Anzeige umfasst, wobei die Anzeige mit dem digitalen Signalverarbeitungsmodul oder dem Steuermodul verbunden ist und zur Anzeige eines Analyseergebnisses der Detektionsvorrichtung verwendet wird.

5. Detektionsvorrichtung für optische Zeitbereichsreflexion mit hohem Dynamikbereich nach einem der Ansprüche 1 bis 3, **dadurch gekennzeichnet, dass** der Raman-Laser insbesondere ein Kaskaden-Raman-Laser ist, der aus mindestens zwei Stufen besteht.

6. Detektionsvorrichtung für optische Zeitbereichsreflexion mit hohem dynamischen Bereich nach Anspruch 5, **dadurch gekennzeichnet, dass** eine Frequenzdifferenz jeder Stufe des Raman-Lasers gegenüber dem Kaskaden-Raman-Laser 12THz-13THz beträgt.

7. Detektionsverfahren für optische Zeitbereichsreflexion mit hoher Dynamik, wobei ein Steuermodul zum Steuern eines Arbeitszustands eines Raman-Lasers und eines OTDR-Detektionslasers verwendet wird und ferner zum Erhalten eines optischen Signals verwendet wird, das von einer zu detektierenden optischen Faser reflektiert wird, und
das Detektionsverfahren umfasst: Senden (201) eines Raman-Pulslasers durch den Raman-Laser und eines Pulslichts durch den OTDR-Detektionslaser an die zu detektierende optische Faser gemäß einem voreingestellten Konfigurationsparameter;
**dadurch gekennzeichnet, dass** das Detektionsverfahren ferner umfasst:
Senden (202) eines Raman-Pulslasers durch den vom Steuermodul gesteuerten Raman-Laser erneut an die zu detektierende optische Faser, falls die Lichtintensität des zurückgestreuten Rayleigh-Lichts und/oder des Fresnel-Reflexionslichts, das in einer vorgegebenen Zeitspanne innerhalb einer Detektionsperiode des von dem OTDR-Detektionslaser ausgesandten Pulslichts detektiert wurde, geringer ist als ein vorgegebener Schwellenwert;
wobei, wenn die eine Detektionsperiode des von dem OTDR-Detektionslaser emittierten Pulslichts spezifisch Nms ist, die voreingestellte Zeitperiode Mms ist, nachdem der OTDR-Detektionslaser das Pulslicht in einer aktuellen Detektionsperiode emittiert, wobei Mms einen Wert aus einem Intervall [0, N/2] annimmt und M und N entsprechende Zeitparameterwerte sind.

8. Detektionsverfahren für optische Zeitbereichsreflexion mit hohem Dynamikbereich nach Anspruch 7, **dadurch gekennzeichnet, dass**
diese eine Detektionsdauer des von dem OTDR-Detektionslaser ausgesandten Pulslichts ermittelt wird durch eine oder mehrere von einer Anzahl von zu detektierenden Knoten in der Glasfaser, einer Bandbreite des vom OTDR-Detektionsslaser ausgesandten Pulslichts und einer Verarbeitungsgeschwindigkeit des Steuermoduls.

9. Detektionsverfahren für optische Zeitbereichsreflexion mit hohem dynamischen Bereich nach Anspruch 7, **dadurch gekennzeichnet, dass**
wenn die Detektionsdauer des von dem OTDR-Detektionslaser ausgesandten Pulslichts 4ms±1s beträgt, die voreingestellte Zeitspanne spezifisch ist innerhalb von 1±0,2ms, nachdem der OTDR-Detektionslaser das Pulslicht ausgesandt hat.

10. Detektionsverfahren für optische Zeitbereichsreflexion mit hohem Dynamikbereich nach Anspruch 7, **dadurch gekennzeichnet, dass**
der voreingestellte Schwellenwert durch Berechnung gemäß einer Berechnungsbedingung erhalten wird, dass eine optische Leistung von erhaltenem Rayleigh-Rückstreulichts und/oder Fresnel-Reflexionslichts um 3-5 dB von einem höchsten Wert reduziert wird, der ursprünglich innerhalb einer Erfassungsperiode des von dem OTDR-Detektionslaser emittierten Impulslichts empfangen wurde.

## Revendications

1. Dispositif de détection pour la réflectométrie optique temporelle à haute dynamique, comprenant un laser Raman, un laser de détection OTDR, un multiplexeur par répartition en longueur d'onde MRL, un module de commande, un module de réception de lumière et de traitement de signal optique, et un circulateur,
le laser Raman et le laser de détection OTDR sont respectivement connectés au MRL, dont une sortie de lumière est connectée à une entrée de lumière du circulateur, et le laser pulsé Raman émis par le laser Raman et la lumière pulsée émise par le laser de détection OTDR sont multiplexés par le MRL et entrent ensuite dans une fibre optique pour être détectés via un port optique E/S du circulateur;
dans lequel le module de réception de lumière et de traitement de signal optique est connecté à une sortie de lumière du circulateur pour obtenir une lumière rétrodiffusée de Rayleigh et/ou une lumière Fresnel réfléchie renvoyée par la fibre optique à détecter;
dans lequel le module de réception de lumière et de traitement de signal optique est également connecté au module de commande pour envoyer au module de commande les informations relatives à la lumière réfléchie;
dans lequel le module de commande est connecté à une tige de commande du laser Raman pour amener le laser Raman à émettre, en fonction des informations relatives à la lumière de réflexion, au moins deux impulsions optiques à un intervalle de temps compris dans une période de détection,
**caractérisé en ce que** le module de commande est utilisé pour amener le laser Raman à envoyer à nouveau le laser Raman pulsé à la fibre optique à détecter, si l'intensité lumineuse de la lumière Rayleigh rétrodiffusée renvoyée et/ou de la lumière de réflexion Fresnel détectée dans une période de temps prédéfinie au cours d'une période de détection de la lumière pulsée émise par le laser de détection OTDR est inférieure à un seuil prédéfini; et
dans lequel lorsque ladite période de détection de la lumière pulsée émise par le laser de détection OTDR est spécifiquement de Nms, la période de temps prédéfinie est de Mms après que le laser de détection OTDR a émis la lumière pulsée dans une période de détection actuelle, Mms ayant une valeur dans un intervalle [0, N/2], M et N étant des valeurs de paramètres temporels correspondantes.

2. Dispositif de détection pour la réflectométrie optique temporelle à haute dynamique selon la revendication 1, **caractérisé en ce que**
le module de commande comprend un module de traitement de signal numérique, dans lequel le module de traitement de signal numérique est connecté au module de réception de lumière et de traitement de signal optique, pour analyser les informations d'une extrémité éloignée de la fibre optique en fonction des informations relatives à la lumière de Rayleigh rétrodiffusée et/ou à la lumière de Fresnel réfléchie, et pour renvoyer les informations de l'extrémité éloignée de la fibre optique au module de commande.

3. Dispositif de détection pour la réflectométrie optique temporelle à haute dynamique selon la revendication 2, **caractérisé en ce que**
le module de commande est en particulier une FPGA, un micro-ordinateur à puce unique ou un microprocesseur; et le module de traitement de signal numérique est en particulier un DSP.

4. Dispositif de détection pour la réflectométrie optique temporelle à haute dynamique selon l'une quelconque des revendications 1 à 3, **caractérisé en ce que**
le dispositif de détection comprend en outre un écran, dans lequel l'écran est connecté au module de traitement de signal numérique ou au module de commande, et est utilisé pour afficher un résultat d'analyse du dispositif de détection.

5. Dispositif de détection pour la réflectométrie optique temporelle à haute dynamique selon l'une quelconque des revendications 1 à 3, **caractérisé en ce que** le laser Raman est en particulier un laser Raman en cascade composé d'au moins deux étages.

6. Dispositif de détection pour la réflectométrie optique temporelle à haute dynamique selon la revendication 5, **caractérisé en ce que** la différence de fréquence entre chaque étage du laser Raman et le laser Raman en cascade est de 12THz-13THz.

7. Procédé de détection pour la réflectométrie optique temporelle à haute dynamique, dans lequel un module de commande est utilisé pour commander l'état de fonctionnement d'un laser Raman et d'un laser de détection OTDR, et est également utilisé pour obtenir un signal optique réfléchi par une fibre optique à détecter, et
le procédé de détection comprend: l'envoi (201) d'un laser Raman pulsé par le laser Raman et d'une lumière pulsée par le laser de détection OTDR à la fibre optique à détecter en fonction d'un paramètre de configuration prédéfini;
**caractérisé en ce que** le procédé de détection comprend en outre:
l'envoi (202), par le laser Raman commandé par le module de commande, à nouveau du laser Raman pulsé à la fibre optique à détecter, si l'intensité lumineuse de la lumière Rayleigh rétrodiffusée renvoyée et/ou de la lumière de réflexion Fresnel détectée dans une période de temps prédéfinie au cours d'une période de détection de la lumière pulsée émise par le laser de détection OTDR est inférieure à un seuil prédéfini;
dans lequel lorsque ladite période de détection de la lumière pulsée émise par le laser de détection OTDR est en particulier de Nms, la période de temps prédéfinie est de Mms après que le laser de détection OTDR a émis la lumière pulsée dans une période de détection actuelle, Mms ayant une valeur dans un intervalle [0, N/2], et M et N étant des valeurs de paramètres temporels correspondantes.

8. Procédé de détection pour la réflectométrie optique temporelle à haute dynamique selon la revendication 7, **caractérisé en ce que**
ladite période de détection de la lumière pulsée émise par le laser de détection OTDR est déterminée par un ou plusieurs des éléments suivants: un nombre de noeuds dans la fibre optique à détecter, une largeur de bande de la lumière pulsée émise par le laser de détection OTDR et la vitesse de traitement du module de commande.

9. Procédé de détection pour la réflectométrie optique temporelle à haute dynamique selon la revendication 7, **caractérisé en ce que**
lorsque la période de détection de la lumière pulsée émise par le laser de détection OTDR est de 4 ms ± 1 s, la période prédéfinie est en particulier comprise dans 1 ± 0,2 ms après l'envoi de la lumière pulsée par le laser de détection OTDR.

10. Procédé de détection pour la réflectométrie optique temporelle à haute dynamique selon la revendication 7, **caractérisé en ce que**
le seuil prédéfini est obtenu par calcul selon une condition de calcul selon laquelle une puissance optique de la lumière de Rayleigh rétrodiffusée et/ou de la lumière de Fresnel de réflexion obtenue est réduite de 3 à 5 dB par rapport à une valeur la plus élevée initialement reçue au cours d'une période de détection de la lumière pulsée émise par le laser de détection OTDR.
